# EUROPÄISCHE PATENTANMELDUNG

(11) **EP 3 112 855 A1**
(43) Veröffentlichungstag der Anmeldung: **04.01.2017**
(21) Anmeldenummer: 16173439.7
(22) Anmeldetag: 08.06.2016
(51) Int. Cl.: G01N 27/22, G01N 29/036, G01N 29/24

(54) **RESONANTER FEUCHTESENSOR, SENSORANORDNUNG UND VERFAHREN ZUR BESTIMMUNG EINES FEUCHTEGEHALTS**

(30) Priorität: 01.07.2015 DE 102015212257
(71) Anmelder: ROBERT BOSCH GMBH, 70442 Stuttgart (DE)
(72) Erfinder: Gross, David, 70435 Stuttgart (DE); Utermoehlen, Fabian, 71229 Leonberg (DE)

(57) **Zusammenfassung**

Die Erfindung betrifft einen Feuchtesensor (7), umfassend
- eine Struktur mit feuchteabhängigem E-Modul (4), welche als schwingfähiges System ausgebildet ist,
dadurch gekennzeichnet, dass
- an der Struktur (4) eine erste Elektrode (5) ausgebildet ist
- auf einem Substrat (1) eine zweite Elektrode (2) angeordnet ist, wobei die erste Elektrode (5) und die zweite Elektrode (2) einen Kondensator bilden und
- eine Auswerteeinheit zur Bestimmung einer feuchteabhängigen Resonanzfrequenz der Struktur (4), die die erste Elektrode trägt und zur Bestimmung der relativen Feuchte aus der Resonanzfrequenz, vorgesehen ist.

## Beschreibung

Die Erfindung betrifft einen Feuchtesensor, eine Anordnung von Feuchtesensoren und ein Verfahren zur Bestimmung eines Feuchtegehalts.

### Stand der Technik

Die Erfindung geht von einem Feuchtesensor, einer Anordnung von Feuchtesensoren und einem Verfahren zur Bestimmung eines Feuchtegehalts nach der Gattung der unabhängigen Patentansprüche aus.

Aus DE 3911812 C2 ist ein Feuchtesensor auf Polymerbasis mit einer feuchtesensitiven, aus Polymer bestehenden Schicht bekannt. Das Material dieser aus Polymer bestehenden Schicht befindet sich zwischen zwei Elektroden und ist insbesondere aufgesputtertes (kathodenzerstäubtes) Polytetrafluorethylen (PTFE). Dieser Feuchtesensor ist mit einer elektrischen Heizung versehen, um durch Aufheizen die Feuchtigkeit des Feuchtesensors auszutreiben und diesen somit immer wieder in einen definierten Grundzustand zurückzuversetzen. Die elektronische Auswertung der Feuchteempfindlichkeit der verwendeten Schicht aus Polymer kann sowohl kapazitiv als auch resistiv erfolgen. Beim kapazitiven Messprinzip wird der Effekt ausgenutzt, dass Wassermoleküle in den mikroskopischen Hohlräumen des amorphen PTFE adsorbiert werden und sich die Kapazität eines mit derartiger PTFE-Schicht aufgebauten Kondensators folglich feuchteabhängig ändert. Ist eine resistive Feuchtebestimmung mittels eines Feuchtesensors auf Polymerbasis vorgesehen, wird das aufgesputterte Grund-PTFE in einem weiteren Verfahrensschritt elektrisch leitfähig gemacht.

In "Electrostatically Actuated All-Polymer Microbeam Resonators-Characterization and Application" (Dissertation von Silvan Schmid, ETH Zürich (2009)) wird ein resonanter Feuchtesensor basierend auf einem strangartigen, doppelseitig eingespannten, polymeren Mikro-Schwingbalken aus dem Material SU-8 mit einer intrinsischen, mechanischen Spannung beschrieben. Da die Resonanzfrequenz solcher polymerer Mikrostränge sehr sensitiv gegenüber einer Änderung der relativen Feuchte ist, wird vorgeschlagen diese Mikrostränge als Feuchtesensoren einzusetzen. Der Feuchtesensor beruht auf dem Prinzip, dass die mechanische Spannung in dem Polymerstrang durch die darauf einwirkende Feuchte abgebaut wird, da die Mikrostränge einer Volumenexpansion durch die einwirkende Feuchte unterliegen. Der Abbau der mechanischen Spannung führt zu einem Abfall der Resonanzfrequenz der Mikrostränge. Zudem werden der Elastizitäts-Modul (E-Modul) und die Dichte des strangartigen Mikroschwingbalkens durch die einwirkende Feuchte beeinflusst. Solche polymere Mikroresonatoren können bisher in einem Standard-Herstellungsverfahren für eine integrierte Fertigung, insbesondere in der Oberflächenmikromechanik, nicht realisiert werden.

### Offenbarung der Erfindung

Die vorliegende Erfindung gibt einen Feuchtesensor, eine Sensoranordnung und ein Verfahren zur Bestimmung einer relativen Feuchte an.

### Vorteile der Erfindung

Es wird ein Feuchtesensor, umfassend eine Struktur mit feuchteabhängigem E-Modul, welche als schwingfähiges System ausgebildet ist, wobei an der Struktur eine erste Elektrode ausgebildet ist, auf einem Substrat eine zweite Elektrode angeordnet ist, wobei die erste Elektrode und die zweite Elektrode einen Kondensator bilden und eine Auswerteeinheit zur Bestimmung einer feuchteabhängigen Resonanzfrequenz der Struktur, die die erste Elektrode trägt und zur Bestimmung der relativen Feuchte aus der Resonanzfrequenz, vorgesehen ist, vorgeschlagen. Vorteilhaft ist, dass bei der Verwendung des erfindungsgemäßen Feuchtesensors und der Sensoranordnung Ansprechzeiten des Feuchtesensors unter zwei Minuten erreicht werden und die Feuchteabsorption und die Feuchtedesorption am Feuchtesensor reversibel sind, sodass es zu keinen unerwünschten Hystereseeffekten kommt.

Der Aufbau eines erfindungsgemäßen Feuchtesensors umfasst eine erste Elektrode, die gegenüber einer zweiten Elektrode angeordnet ist, welche auf einem Substrat ausgebildet und in einem Abstand zur ersten Elektrode angeordnet ist. Zusammen bilden die erste Elektrode und die zweite Elektrode einen Kondensator. Desweiteren umfasst der Aufbau eine Struktur mit feuchteabhängigem E-Modul, die die erste Elektrode trägt. Die Resonanzfrequenz der Struktur ändert sich, wenn sie einer Feuchte ausgesetzt wird, da sich insbesondere der E-Modul auf Grund der einwirkenden Feuchte verändert. Der erfindungsgemäße Feuchtesensor ermöglicht aufgrund seines Aufbaus vorteilhafterweise eine Herstellung unter Verwendung von Standard-Prozessen der Halbleiterindustrie.

Insbesondere wird die Struktur mit feuchteabhängigem E-Modul in einer Ausführungsform als Lack ausgebildet, der bei der Herstellung des Feuchtesensors auf eine andere Schicht, beispielsweise eine Opferschicht, aufgeschleudert werden kann. Dadurch werden vorteilhafterweise Prozesskosten eingespart.

Zusätzlich oder alternativ wird die erste Elektrode aus dem gleichen Material, wie die Struktur ausgebildet. Dabei wird ausgenutzt, dass in dem Material mit feuchteabhängigem E-Modul ein elektrischer Dipol induziert wird, der als "Gegenelektrode" zur zweiten Elektrode wirkt. Ein Vorteil ist, dass bei der Herstellung des Feuchtesensors Prozessschritte entfallen, da die erste Elektrode direkt mit der Struktur aufgebracht werden kann.

In einer weiterführenden Gestaltungsform wird das Substrat als CMOS-Wafer (CMOS=Complementary metal-oxide-semiconductor), insbesondere als ASIC (application-specific integrated circuit) ausgebildet. Dadurch kann vorteilhafterweise der Feuchtesensor direkt auf eine entsprechende Auswerteschaltung aufgebracht werden. Somit wird auch beispielsweise die Integration eines Lock-In Verstärkers zur Unterdrückung von Rauschen ermöglicht, was insbesondere bei einer Closed-Loop Auswertung zur Bestimmung der Resonanzfrequenz der Struktur von Vorteil ist.

Vorzugsweise wird die zweite Elektrode sowohl als Antriebselektrode als auch als Detektionselektrode verwendet, um die feuchteabhängige Resonanzfrequenz des Feuchtesensors kapazitiv zu bestimmen. Dadurch entfällt das Strukturieren mehrerer Elektroden und der Sensor kann platzsparend integriert werden.

In einer alternativen Ausführungsform dient die zweite Elektrode als Detektionselektrode und es wird eine zusätzliche Elektrode auf dem Substrat ausgebildet, die als Antriebselektrode verwendet wird. Dies erlaubt eine deutlichere Signaltrennung und erhöht die Bandbreite des Sensors.

Zusätzlich oder alternativ wird die zweite Elektrode in Form mehrerer separater Einzelelektroden auf dem Substrat ausgebildet, die als Detektionselektroden dienen. Hiermit kann überprüft werden, in welcher Mode die Struktur schwingt, um eine genauere Auswertung zu erreichen und eine Fehlererkennung zu implementieren.

Eine unerwünschte Temperaturempfindlichkeit des erfindungsgemäßen Feuchtesensors wird vorteilhafterweise mittels einer Differenzmessung kompensiert. Hierzu wird eine bevorzugte Sensoranordnung, umfassend ein Sensoreinheitenpaar, von denen eine Sensoreinheit als erfindungsgemäßer Feuchtesensor ausgebildet ist und die andere eine Bezugssensoreinheit darstellt, wobei die Bezugssensoreinheit parallel und baugleich zu dem Feuchtesensor zusammen mit dem Feuchtesensor auf einem gemeinsamen Substrat gefertigt wird, verwendet. Die Bezugssensoreinheit wird hierbei im Gegensatz zum Feuchtesensor nicht der umgebenden Feuchte ausgesetzt. Hierzu wird die Bezugssensoreinheit mit einer Verkappung versehen, die die Bezugssensoreinheit von der umgebenden Feuchte abschirmt, sodass von der Bezugssensoreinheit nur die unerwünschten Temperatureffekte und sonstige Effekte wie Alterung und Chipverbiegung gemessen werden. Die Verkappung wird insbesondere mittels eines Niedertemperaturbondverfahrens aufgebracht.

Zur Bestimmung eines Feuchtegehalts eines Mediums mittels eines erfindungsgemäßen Feuchtesensors wird die Resonanzfrequenz der Struktur ermittelt. Mittels einer in der Auswerteeinheit hinterlegten Kennlinie wird diese einer relativen Feuchte zugeordnet. Die relative Feuchte ist definiert als Verhältnis der Masse des Wasserdampfs in einem Einheitsvolumen zu der maximalen Masse des Wasserdampfes, der von diesem Einheitsvolumen in Sättigung bei einer gegebenen Temperatur gefasst werden kann. Die Änderung der Resonanzfrequenz der Struktur basiert auf einer Veränderung der Materialeigenschaften, insbesondere der Änderung des E-Moduls auf Grund der einwirkenden Feuchte.

Ein Verfahren zur Bestimmung der Resonanzfrequenz der Struktur, die ein Maß für die relative Feuchte des umgebenden Mediums darstellt, umfasst die nachfolgenden Schritte. Der Feuchtesensor wird über die erste Elektrode und die zweite Elektrode mit einem elektrischen Wechselfeld angetrieben. Die Frequenz des elektrischen Wechselfeldes wird so eingestellt, dass der Energieübertrag auf das schwingfähige System, hier die Struktur, maximal ist, sodass der Resonanzfall vorliegt. Die Resonanz der Struktur führt zu einer maximalen zeitlichen Änderung der Kapazität. Diese wird mittels der Detektionselektroden erfasst. Die Frequenz des elektrischen Feldes wird so eingestellt, dass an den Detektionselektroden eine maximale zeitliche Kapazitätsänderung registriert wird. Die Resonanzfrequenz wird über eine Kennlinie einer relativen Feuchte zugeordnet. Hierdurch ergibt sich ein gegenüber anderen Einflüssen, wie beispielsweise Bewegung, robustes Messverfahren mit inhärenter mechanischer Verstärkung.

### Kurze Beschreibung der Zeichnungen

Ausführungsbeispiele der Erfindung sind in den Zeichnungen dargestellt und werden in der nachfolgenden Beschreibung näher erläutert. Gleiche Bezugszeichen in den Figuren bezeichnen gleiche oder gleichwirkende Elemente.

### Es zeigen

Fig. 1 den Querschnitt eines erfindungsgemäßen Feuchtesensors, mit einer ersten Elektrode aus einem Material, das sich von dem der Struktur mit dem feuchteabhängigen E-Modul unterscheidet,
Fig. 2 den Querschnitt eines erfindungsgemäßen Feuchtesensors, mit einer ersten Elektrode, die aus dem gleichen Material wie die Struktur mit dem feuchteabhängigen E-Modul ausgebildet ist,
Fig. 3 den Querschnitt einer erfindungsgemäßen Sensoranordnung zur Kompensation der Temperaturempfindlichkeit,
Fig. 4 den Querschnitt eines erfindungsgemäßen Feuchtesensors, mit einer zweiten Elektrode, die in räumlich getrennte Detektionselektroden und eine räumlich von den Detektionselektroden getrennte Antriebselektrode unterteilt ist.

### Ausführungsformen der Erfindung

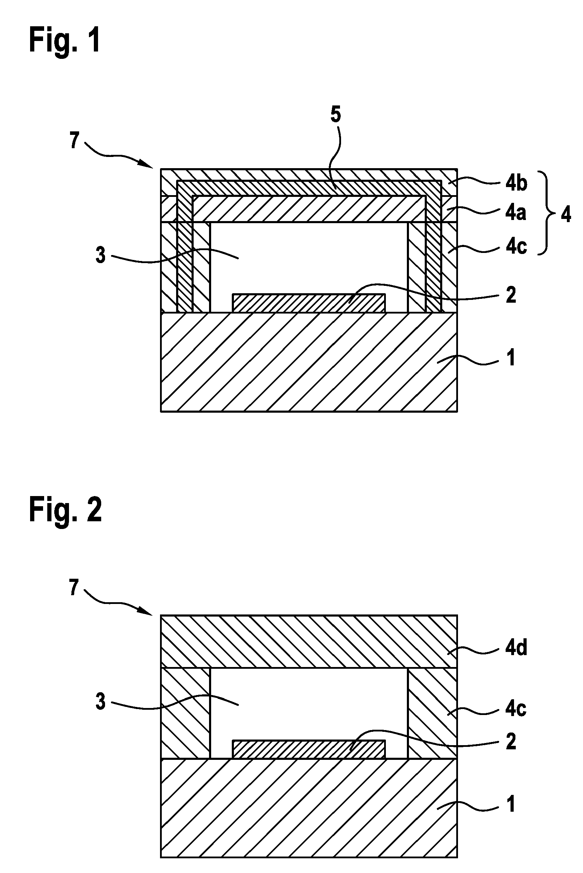

In Figur 1 wird ein erfindungsgemäßer Feuchtesensor 7 im Schnitt dargestellt. In dieser Ausführungsform ist auf der Oberseite eines Substrats 1 eine zweite Elektrode 2 ausgebildet. Bevorzugt wird das Substrat 1 als CMOS-Wafer ausgebildet, der in der obersten Metalllage bereits eine Elektrode enthält, die als zweite Elektrode 2 ausgeführt ist. Auf dem Substrat 1 ist eine freitragende Struktur 4 aufgebracht. Das Substrat 1 und die freitragende Struktur 4 schließen einen Hohlraum 3 ein. Die zweite Elektrode 2 ist innerhalb des Hohlraums 3 auf der Oberseite des Substrats 1 ausgebildet. Gegenüber der zweiten Elektrode 2 wird eine erste Elektrode 5, die im vorliegenden Fall vorzugsweise von der Struktur 4 umschlossen ist, angeordnet. In diesem Ausführungsbeispiel ist die erste Elektrode 5 als Metallisierung zwischen einer ersten Schicht 4a des Materials mit feuchteabhängigem E-Modul und einer zweiten Schicht 4b des Materials mit feuchteabhängigem E-Modul ausgebildet. Die Metallisierung, die die erste Elektrode 5 bildet, weist vorzugsweise eine Dicke im Bereich von 100 nm auf. Die erste Schicht 4a des Materials mit feuchteabhängigem E-Modul, die zweite Schicht 4b des Materials mit feuchteabhängigem E-Modul und die erste Elektrode 5 sind mit Hilfe von Tragearmen 4c mit dem Substrat verbunden. Die Tragearme 4c bestehen aus dem Material mit feuchteabhängigem E-Modul. Im Kern der Tragearme 4c ist eine Metallisierung ausgebildet, die von dem Material mit feuchteabhängigem E-Modul vollständig umschlossen wird. Die Metallisierung bildet eine elektrische Verbindung zwischen der ersten Elektrode 5 und Kontakten auf der Substratoberfläche. Die Tragearme 4c, die erste Schicht 4a des Materials mit feuchteabhängigem E-Modul und die zweite Schicht 4b des Materials mit feuchteabhängigem E-Modul bilden zusammen die Struktur 4.

Die Herstellung des in Fig. 1 dargestellten, erfindungsgemäßen Feuchtesensors 7 umfasst bevorzugt die nachfolgenden Prozessschritte, die in an sich bekannter Weise nach Standard-Prozessen der Halbleiterindustrie erfolgen. Zunächst wird ein geeigneter Substratwafer 1 bereitgestellt. Vorzugsweise enthält dieser an der Oberseite bereits eine zweite Elektrode 2, beispielsweise kann die oberste Lage eines CMOS-Wafers als zweite Elektrode 2 verwendet werden. Anschließend wird eine Opferschicht auf das Substrat 1 und die zweite Elektrode 2 aufgebracht. Die Opferschicht kann insbesondere aus Photolack oder Metall ausgebildet sein und vorzugsweise eine Dicke zwischen 100 nm und 1 µm aufweisen. Die Dicke der Opferschicht definiert den Ruheabstand der ersten Elektrode 5 und der zweiten Elektrode 2, sowie die Abmessungen des Hohlraums 3, der durch das Substrat 1 mit der zweiten Elektrode 2 und der Struktur 4 eingeschlossen wird. Auf die Opferschicht wird in einem weiteren Prozessschritt eine erste Schicht des Materials mit feuchteabhängigem E-Modul 4a aufgebracht und strukturiert. Das Material mit feuchteabhängigem E-Modul 4a, 4b, 4c kann insbesondere ein Lack sein, der in Form einer 1 µm bis 20 µm dicken Schicht auf die Opferschicht aufgebracht wird. Geeignet sind hier beispielsweise Lacke auf Epoxidharz- oder Polyvinylidenfluorid-Basis (PVDF) Insbesondere kann bei Verwendung eines Lackes dieser auf die Opferschicht aufgeschleudert oder aufgesprüht werden. Anschließend werden die Kontakte, die auf der Oberseite des Substrats 1 angeordnet sind, durch Ätzen freigelegt. In der in Fig. 1 gezeigten Ausführungsform wird die erste Elektrode 5 aus einem anderen Material gefertigt, als die die erste Elektrode 5 umgebende Struktur 4. Daher wird im Herstellungsverfahren auf die erste Schicht 4a des Materials mit feuchteabhängigem E-Modul eine Metallschicht mit einer Dicke im Bereich von 100 nm abgeschieden und strukturiert, die die erste Elektrode 5 bildet und damit eine Gegenelektrode zur zweiten Elektrode 2 darstellt, die gegenüber der ersten Elektrode 5 angeordnet ist. Zusammen bilden die erste Elektrode 5 und die zweite Elektrode 2 somit einen Kondensator mit einer elektrischen Kapazität, die durch die Geometrie der Elektroden 2, 5, durch das sich zwischen den Elektroden 2, 5 befindliche Medium und den Abstand der Elektroden 2, 5 voneinander bestimmt wird. Die auf die erste Schicht 4a des Materials mit feuchteabhängigem E-Modul abgeschiedene Metallisierung füllt zudem die Vertiefungen aus, die durch das Ätzen zur Freilegung der Kontakte des Substrats 1 entstanden sind. Durch das Aufbringen der Metallisierung wird somit zusätzlich eine elektrische Verbindung zwischen den Kontakten des Substrats 1 und der ersten Elektrode 5 hergestellt. Auf der ersten Elektrode 5 wird nun eine zweite Schicht 4b des Materials mit feuchteabhängigem E-Modul abgeschieden und strukturiert, sodass die erste Elektrode 5 nun vollständig von der Struktur 4 umschlossen wird. Die Dicke der zweiten Schicht des Materials mit feuchteabhängigem E-Modul beträgt im vorliegenden Ausführungsbeispiel zwischen 1 µm und 20 µm. Anschließend erfolgt ein Tempern des Lackes, damit er unempfindlich gegenüber dem Ätzprozess zur Entfernung der Opferschicht wird. Im nachfolgenden Prozessschritt wird die Opferschicht mittels Ätzen entfernt. Dadurch ergibt sich eine freitragende Struktur, umfassend die Struktur 4 mit der ersten Elektrode 5, die gegenüber der zweiten Elektrode 2 angeordnet ist, die zusammen mit dem Substrat 1 und der sich auf der Oberseite des Substrats 1 befindlichen zweiten Elektrode 2 einen Hohlraum 3 umschließt.

Der Aufbau des Feuchtesensors 7, der in Fig. 2 dargestellt ist, ist weitgehend identisch mit dem aus Fig. 1, wobei die erste Elektrode 5 aus einem anderen Material ausgebildet wird. Die erste Elektrode 5 ist in diesem Ausführungsbeispiel aus dem gleichen Material wie die Struktur 4 ausgeführt. Wird die erste Elektrode 5 aus dem gleichen Material wie die Struktur 4 hergestellt, wie dies in Fig. 2 dargestellt ist, wirkt die Struktur 4d zusätzlich als erste Elektrode 5. Im Gegensatz zu der in Fig. 1 dargestellten Ausführungsform des erfindungsgemäßen Feuchtesensors 7 entfallen bei der Herstellung des in Fig. 2 gezeigten Feuchtsensors 7 die Prozessschritte Aufbringen einer Metallisierung auf eine erste Schicht 4a des Material mit feuchteabhängigem E-Modul und das anschließende Abscheiden einer zweiten Schicht 4b des Materials mit feuchteabhängigem E-Modul. Alle anderen Prozessschritte sind identisch zu denen, die im Zusammenhang mit der Herstellung des in Fig.1 gezeigten Feuchtesensors 7 beschrieben sind. Die elektrische Kontaktierung der ersten Elektrode erfolgt in diesem Ausführungsbeispiel über auf dem Substrat vorhandene Kontakte. Voraussetzung hierfür ist, dass die Struktur 4d eine elektrische Leitfähigkeit aufweist.

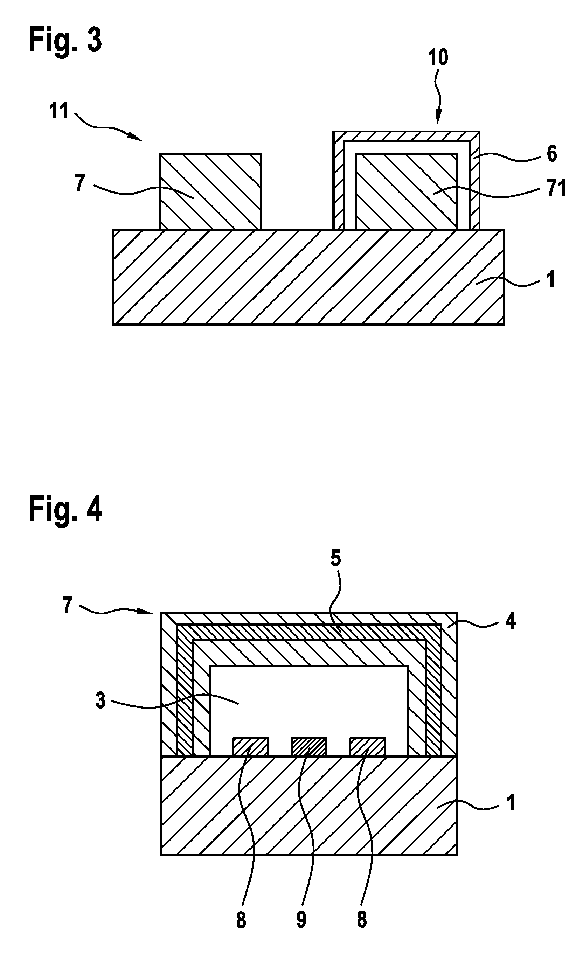

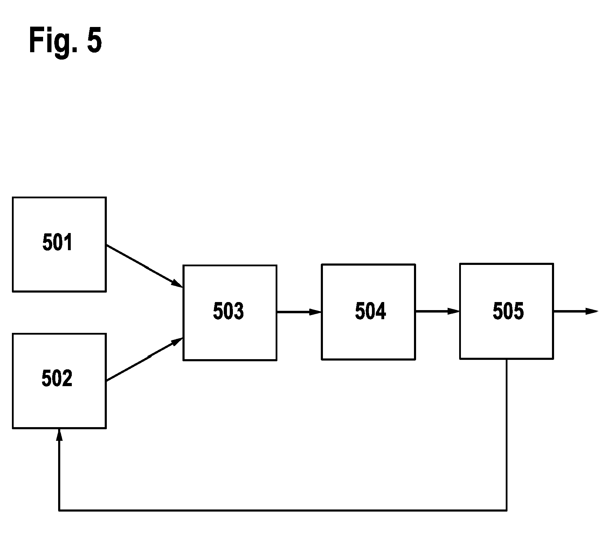

Fig. 3. zeigt eine Sensoranordnung 11 mit zusätzlichen Mitteln zur Kompensation der Temperaturempfindlichkeit. Der Feuchtesensor 7 wird analog zu dem im Zusammenhang mit Fig. 1 beschriebenen Herstellungsverfahren gefertigt. Parallel dazu wird auf dem gleichen Substrat 1 eine Bezugssensoreinheit 10 unter Verwendung des gleichen Herstellungsverfahrens gefertigt. Das heißt, dass die einzelnen Prozessschritte des im Zusammenhang mit Fig. 1 beschriebenen Herstellungsverfahrens jeweils auf verschiedenen Abschnitten des Substrats 1 ausgeführt werden, sodass am Ende des Herstellungsprozesses auf dem Substrat 1 zwei vorzugsweise baugleiche Feuchtesensoren 7 angeordnet sind. Einer der Feuchtesensoren 7, 71 wird in einem zusätzlichen Prozessschritt beispielsweise mittels eines Niedertemperaturbondverfahrens verkappt, sodass er von der umgebenden Feuchte abgeschirmt ist. Der Feuchtesensor 71 mit Verkappung 6 wird als Bezugssensoreinheit 10 bezeichnet. Durch die Verwendung der Sensoranordnung aus Fig. 3 wird bei der Messung der relativen Feuchte die Temperaturempfindlichkeit des Feuchtesensors kompensiert. Das Sensorsignal der Bezugssensoreinheit 10 dient der Bestimmung einer temperaturabhängigen Änderung des E-Moduls der Struktur 4. Wegen der feuchteundurchlässigen Verkappung 6 ist die Bezugssensoreinheit 10 von der umgebenden Feuchte abgeschirmt, sodass die Bezugssensoreinheit nicht die umgebende Feuchte, sondern die temperaturabhängigen Änderung des E-Moduls und somit die Temperaturempfindlichkeit der Struktur 4 ermittelt. Die Kompensation der Temperaturempfindlichkeit erfolgt mittels einer Differenzmessung des Messsignals des Feuchtesensors 7 und dem Sensorsignal der Bezugssensoreinheit 10. Die Bezugssensoreinheit 10 wird vorzugsweise mit dem gleichen Verfahren wie der Feuchtesensor 7 ausgewertet.

Alternativ zur Verwendung der erfindungsgemäßen Sensoranordnung 11 wird die Kompensation der Temperaturempfindlichkeit des Feuchtesensors 7 mittels einer Temperaturmessung in der Nähe des Feuchtesensors 7 vorgenommen. Hierzu wird auf dem Substrat, welches über eine gute Wärmeleitfähigkeit verfügt und auf dem auch der erfindungsgemäße Feuchtesensor 7 ausgebildet ist, ein Temperatursensor angeordnet. Während der Feuchtesensor 7 die relative Feuchte misst, erfasst der Temperatursensor die Temperatur, die während der Feuchtemessung herrscht. Anhand einer Kennlinie wird die gemessene relative Feuchte in Bezug zur Temperatur gesetzt, um eine Kompensation der Temperaturempfindlichkeit des Feuchtesensors 7 vorzunehmen. Bei diesem Kompensationsverfahren wird nach dem Herstellungsprozess des Feuchtesensors 7 eine einmalige Kalibration vorgenommen. Hierzu wird beispielsweise die relative Feuchte eines Mediums bei verschiedenen Temperaturen gemessen. Daraus wird eine Kennlinie erzeugt, die in der Auswerteeinheit hinterlegt wird und im Folgenden der Kompensation der Temperaturempfindlichkeit dient.

In Fig. 1, Fig. 2 und Fig. 3 ist die zweite Elektrode 2 einteilig ausgebildet. Sie dient hierbei sowohl als Antriebselektrode 9 als auch als Detektionselektrode 8. Fig. 4 zeigt eine alternative Ausführungsform der zweiten Elektrode 2. In diesem Ausführungsbeispiel ist die zweite Elektrode 2 mehrteilig, umfassend eine Antriebselektrode 9 und zwei Detektionselektroden 8, ausgeführt. Die Antriebselektrode 9 ist mittig auf dem Substrat 1 angeordnet, sodass der Abstand zu den Tragearmen 4c in alle Richtungen gleich groß ist. Links und rechts der Antriebselektrode 9 ist jeweils eine Detektionselektrode 8 ausgebildet. Alternativ können die Funktionen der Elektroden 8, 9 vertauscht werden, sodass die vormalige Antriebselektrode 9 zur Messung der zeitlich veränderlichen Kapazität verwendet wird und der Antrieb über die zuvor zur Detektion der zeitlich veränderlichen Kapazität verwendeten Elektroden 8 erfolgt.

Für die Bereitstellung eines Verfahrens zur resonanten Auswertung eines Feuchtesensors 7 wird zwischen zwei Varianten von Feuchtesensoren 7 unterschieden. In einer ersten Variante wird der erfindungsgemäße Feuchtesensor 7 aus Fig. 1 verwendet. Hier erfolgt der Antrieb des Feuchtesensors mittels eines elektrischen Wechselfeldes über die erste Elektrode 5 und die zweite Elektrode 2, wobei die erste Elektrode 5 die Gegenelektrode zur zweiten Elektrode 2 bildet. In einer zweiten Variante wird der Feuchtesensor 7 aus Fig. 2 verwendet. In dieser Ausführungsform ist die erste Elektrode 5 nicht als metallische Schicht ausgebildet, sondern aus dem Material ausgebildet, aus dem auch die Struktur 4 gefertigt ist. In letzterem Fall wird in der Struktur 4 ein Dipol induziert, der die Funktion einer Gegenelektrode zur zweiten Elektrode 2 übernimmt. In beiden Varianten erfolgt die Bestimmung der relativen Feuchte mit dem gleichen Verfahren, das nachfolgend beschrieben wird.

An die Antriebselektrode 9 wird ein elektrisches Wechselfeld angelegt. Die Struktur 4 wird somit zu einer mechanischen Schwingung angeregt. Durch diese mechanische Schwingung ändert sich der Abstand zwischen der Struktur 4 mit der daran angebrachten ersten Elektrode 5 und der zweiten Elektrode 2 zeitlich. Daraus ergibt sich eine zeitlich veränderliche Kapazität, die aus dem zeitlich veränderlichen Abstand der Elektroden 2, 5 resultiert. Die Kapazitätsänderung wird mit Hilfe der Detektionselektroden 8 aufgenommen. Denn durch die sich ändernde Kapazität verändert sich die elektrische Ladung auf der Detektionselektrode 8 mit der Zeit. Eine zeitlich veränderliche Ladung definiert einen elektrischen Wechselstrom. Dieser kann nun detektiert werden. Es wird die Frequenz des an der Antriebselektrode 9 angelegten elektrischen Wechselfeldes so eingestellt, dass der an den Detektionselektroden 8 registrierte Strom eine maximale Amplitude aufweist. Diese Einstellung entspricht dem Fall, dass das treibende Feld maximale Energie an die Struktur 4 überträgt, sodass ein Resonanzfall auftritt. Die Frequenz des elektrischen Wechselfeldes entspricht in dieser Einstellung der Resonanzfrequenz der Struktur 4. Diese Frequenz kann vorzugsweise mittels einer Closed-Loop Auswertung mit Lock-In Verfahren bestimmt werden. Hierzu werden zwei Signale 501, 502 benötigt, zum einen das Messsignal 501, in diesem Fall das elektrische Wechselfeld, das an der Antriebselektrode 9 angelegt ist, zum anderen ein Referenzsignal 502, beispielsweise ein sinusförmiges elektrisches Wechselfeld, dessen Frequenz zu jedem Zeitpunkt bekannt ist und dessen Phase regelbar ist. Das Messsignal 501 und das Referenzsignal 502 bilden die Eingangssignale eines Multiplizierers 503. Mithilfe eines Tiefpasses 504 wird das Ausgangssignal des Multiplizierers gefiltert, sodass das Ausgangssignal des Tiefpasses 504 ein DC-Signal ist, das an eine Kontrolleinheit 505 weitergegeben wird. Der DC-Ausgang des Tiefpasses 504 der Closed-Loop Auswertung ergibt Null, wenn die Frequenzen des Referenzsignals 502 und des Messsignals 501 übereinstimmen. Ergibt sich am Ausgang des Tiefpasses 504 ein Signal ungleich Null, wird die Frequenz des Referenzsignals 502 verstellt und erneut mit der Frequenz des Messsignals 501 abgeglichen. Die Frequenz des Referenzsignals 502 wird solange angepasst, bis die Kontrolleinheit 505 eine Null registriert. Wenn am Ausgang des Tiefpasses 504 der Closed-Loop Auswertung eine Null ausgegeben wird, entspricht die Frequenz des treibenden Feldes, das an der Antriebselektrode 9 angelegt ist und das mit der Resonanzfrequenz der Struktur 4 übereinstimmt, der bekannten Frequenz des Referenzsignals 502. Alternativ kann die Frequenz des elektrischen Wechselfeldes, das an der Antriebselektrode angelegt wird mittels eines Zählers ermittelt werden. Diese Frequenz, die der Resonanzfrequenz der Struktur 4 entspricht, kann mittels einer Kennlinie einer relativen Feuchte zugeordnet werden. Der Zusammenhang zwischen der Resonanzfrequenz der Struktur 4 und der relativen Feuchte wird in einer einmaligen Kalibriermessung bestimmt. Die Kennlinie, die mittels der Kalibriermessung ermittelt wird, wird in der Auswerteeinheit, beispielsweise dem ASIC, hinterlegt. Als Ausgabe des Feuchtesensors dient somit die aus der Änderung der Resonanzfrequenz der Struktur 4 ermittelte relative Feuchte.

## Patentansprüche

1. Feuchtesensor (7), umfassend
- eine Struktur mit feuchteabhängigem E-Modul (4), welche als schwingfähiges System ausgebildet ist,
**dadurch gekennzeichnet, dass**
- an der Struktur (4) eine erste Elektrode (5) ausgebildet ist
- auf einem Substrat (1) eine zweite Elektrode (2) angeordnet ist, wobei die erste Elektrode (5) und die zweite Elektrode (2) einen Kondensator bilden und
- eine Auswerteeinheit zur Bestimmung einer feuchteabhängigen Resonanzfrequenz der Struktur (4), die die erste Elektrode trägt und zur Bestimmung der relativen Feuchte aus der Resonanzfrequenz, vorgesehen ist.

2. Feuchtesensor (7) nach Anspruch 1, **dadurch gekennzeichnet, dass** die Struktur mit feuchteabhängigem E-Modul (4) als Lack ausgeführt ist.

3. Feuchtesensor (7) nach einem der vorhergehenden Ansprüche, **dadurch gekennzeichnet, dass** die erste Elektrode (5) aus dem Material, dessen E-Modul von der relativen Feuchte abhängt, ausgebildet wird.

4. Feuchtesensor (7) nach einem der vorhergehenden Ansprüche, **dadurch gekennzeichnet, dass** das Substrat (1) des Feuchtesensors als CMOS-Wafer mit Auswerteschaltung ausgebildet ist.

5. Feuchtesensor (7) nach einem der vorhergehenden Ansprüche, **dadurch gekennzeichnet, dass** die zweite Elektrode (2) sowohl als Detektionselektrode (8) als auch als Antriebselektrode (9) dient.

6. Feuchtesensor (7) nach einem der Ansprüche 1 bis 4, **dadurch gekennzeichnet, dass** die zweite Elektrode (2) als Detektionselektrode (8) dient und die Antriebselektrode (9) separat auf dem Substrat (1) ausgebildet ist.

7. Feuchtesensor (7) nach einem der Ansprüche 1 bis 4 oder Anspruch 6, **dadurch gekennzeichnet, dass** die zweite Elektrode (2) in Form mehrerer separater Detektionselektroden (8) auf dem Substrat (1) ausgebildet ist.

8. Sensoranordnung (11), umfassend ein Sensoreinheitenpaar, von denen eine Sensoreinheit als Feuchtesensor (7) nach einem der Ansprüche 1 bis 7 ausgebildet ist und die andere eine Bezugssensoreinheit (10) darstellt, wobei die Bezugssensoreinheit (10) parallel und baugleich zu dem Feuchtesensor (7) zusammen mit dem Feuchtesensor (7) auf einem gemeinsamen Substrat (1) gefertigt wird.

9. Sensoranordnung (11) nach Anspruch 8, **dadurch gekennzeichnet, dass** die Bezugssensoreinheit (10) mit einer feuchteundurchlässigen Verkappung (6) ausgeführt ist.

10. Verfahren zur Bestimmung eines Feuchtegehalts eines Mediums mittels eines Feuchtesensors (7) nach einem der Ansprüche 1 bis 7 oder einer Sensoranordnung nach Anspruch 8 oder 9, **dadurch gekennzeichnet, dass** mittels der nachfolgenden Schritte ein Maß für die relative Feuchte des Mediums bestimmt wird:
- Die Struktur (4) wird über die erste Elektrode (5) und die Antriebselektrode (9) mit einem elektrischen Wechselfeld getrieben.
- Die Frequenz des elektrischen Wechselfeldes wird so eingestellt, dass die Struktur (4) resonant vom elektrischen Wechselfeld getrieben wird, wobei die Resonanz durch eine maximale zeitliche Änderung der Kapazität definiert ist, welche mittels der Detektionselektroden (8) erfasst wird.
- Die Resonanzfrequenz der Struktur (4) wird anschließend über eine Kennlinie einer relativen Feuchte zugeordnet.
